# EUROPEAN PATENT APPLICATION

(11) **EP 4 187 373 A1**
(43) Date of publication of application: **31.05.2023**
(21) Application number: 21210173.7
(22) Date of filing: 24.11.2021
(51) Int. Cl.: G06F 9/4401, G06F 11/14

(54) **TECHNIQUES FOR REMOTELY RESTORING A FUNCTIONALITY OF A TECHNICAL DEVICE OPERATED WITH ELECTRICITY**

(71) Applicant: Deutsche Telekom AG, 53113 Bonn (DE)
(72) Inventor: Benner, Alexander, Gehlert (DE)
(74) Representative: Braun-Dullaeus Pannen Emmerling Patent- & Rechtsanwaltspartnerschaft mbB

(57) **Abstract**

Techniques for restoring a functionality of a technical device operated with electricity, in particular the method is executable by means of an arrangement, comprising the following steps:
Providing a connector, wherein the connector is provided on the powered technical device such as to enable or disable a power supply to the device;
Sending a radio signal by means of a user terminal to the connector, in particular the radio signal is sent when a malfunction of the technical device has been detected;
Execution of a control command caused by the radio signal to restore the functionality of the device,
wherein the radio signal is transmitted from the user terminal to the connector by means of an NB-IoT radio signal and/or a mobile radio signal.

## Description

The invention relates to a method, a connector, a user terminal, and an arrangement for remotely restoring a functionality of a technical device operated with electricity.

Digitization is advancing steadily in many areas. However, it is also true that many people have difficulty coping with these technical innovations. This means that when a technical device no longer works as expected, many of these people do not know what to do. Either a technician is called, the device is no longer used, or a new device is purchased, even though it is often just a small thing that causes the device to stop working.

The reason for this is usually that more and more software (firmware) is being used in technical devices and, in some cases, more and more options are being created in these technical devices for a user to personalize these devices in the settings. On the one hand, this leads to the fact that "unexpected" states can occur in devices (at the latest when a person tries to operate a device "differently" than expected by the device), so that the device then no longer functions correctly.

In principle, this affects a wide variety of technical devices, such as media recorders (e.g. for Magenta TV), routers (such as the Speedport), amplifiers with Internet radio, smart TVs, smart kitchen and household appliances, and many others.

When technical devices stop working properly, a well-known and popular approach is to first restart the corresponding device. This de-energizes the device for a certain period of time, after which the power is turned back on. In practice, this is usually done by unplugging the power plug and, after a certain waiting period, plugging it back in. Another term for "restart" that is especially common within the context of computers is "reboot".

The most common problems with technical equipment can be corrected by this simple measure. This is due to the fact that the power failure or the switching on of any device is one of the standard events for which the technical devices are already prepared at the factory. The startup usually leads to a defined basic state of the device, where the functionality is restored.

However, there are numerous situations in which such a restart is not executed or cannot be executed. This may be due to ignorance or fear of "breaking" something on the technical device, or the technical device is not accessible - this may be due to structural reasons or because the user of the device is far away from the device (e.g. vacation) and therefore cannot restart it manually on the device itself.

Well-known is the use of intermediate plugs or connectors that can be switched on and off locally by radio (e.g. on 433 MHZ in the ISM frequency band or on 2.4 or 5.4 GHz in the WLAN), and thus pass on their status to the technical device that draws power from them.

However, this has the disadvantage that often only more or less technically experienced people can operate them; moreover, these people usually have to be on site because of the local network. If the local WLAN via which the connector is operated is not available, the connector cannot be controlled.

In the state of the art, the intermediate plug or the connector is implemented via a cloud or a server of a provider of the loT platform or manufacturer of the loT device. Typically, the connector is controlled via app and/or web portal. For this, a user usually needs a smartphone or a PC to enter the corresponding commands. Typically, the procedure starts by logging into the app or web portal, with announcement and, if necessary, subsequent configuration of the respective actuator. The connector can be controlled by calling up the app or logging into the web portal and transmitting commands to the intermediate plug and executing the corresponding switching functions stored there. However, functional reliability - i.e., how reliably the procedure works - is only given to a limited extent. If the app or the web portal cannot be called up or if the command execution does not succeed, this is often not transparent for the user and he has no knowledge of the technical cause. In terms of security with regard to possible cyberattacks, the web portals, for example, can be adversely hacked and thus represent a security risk. In addition, the user's passwords can be guessed, hacked and/or criminally captured, so that unauthorized persons can execute the switching functions.

In the view of above, it is an object of the present invention to provide techniques that provide a user-friendly and at the same time secure way to control a connector with at least one switching function, in particular a restart function.

This object is solved by the features of the independent claims.

The features of the various aspects of the invention described below or the various examples of implementation may be combined with each other, unless this is explicitly excluded or is technically impossible.

According to a first aspect of the invention, a connector for restoring a functionality of a powered technical device is disclosed. The connector is arranged to be permanently or temporarily, in particular detachably, connected to the device. For this purpose, the connector can be plugged into the device, in particular in the form of an intermediate plug, or integrated into the device. The connector according to the invention comprises:
- a first interface designed for connection to a current-carrying line or to a battery;
   ∘ the battery can be the battery of the technical device and the current-carrying line can be the current-carrying line of a socket;
   ∘ wherein the current-carrying line and/or the battery is in particular used to provide a power supply to the technical device;
- a second interface designed for connection to a power line of the technical device;
   ∘ wherein the connection of the first and/or the second interface may be formed as a releasable connection as well as a permanent connection;
   ∘ the second interface can be an interface forwards the power to the technical device;
- a radio module designed to receive and/or transmit at least one radio signal;
- a SIM module, the SIM module assigning a unique call number to the connector, the call number being callable by a user, in particular by his user terminal,
   ∘ the SIM module can be designed as an eSIM and/or as a SIM card;
   ∘ to receive radio signals, the radio module can be connected to the SIM module and communicate with each other in a manner known to the skilled person;
   ∘ the corresponding telephone number and/or radio network may be provided by a telecommunications provider;
- a processor, the processor being designed to execute control commands;
   ∘ in particular, the processor is set up as a possible control command to block and/or unblock a forwarding of the current from the first interface to the second interface;
   ∘ the processor is designed in particular to read out the radio signals assigned to it by means of the call number and/or to start menu navigation in response.

It is now a core feature of the invention that the radio signal is in the form of an NB-loT radio signal and/or a mobile radio signal, and
in that the radio signal comprises at least one control command and/or in that the processor, in response to receiving the radio signal, starts a menu navigation for transmitting the control command.

If the connector is integrated into the technical device, then the power supply of the technical device can by an internal battery of the technical device and/or an external power supply like a wall socket. If the connector is arranged between the battery of the technical device and the other components of the technical device that require energy from the battery, then the connector can trigger a restart even for those technical devices that do not require power from a line. Which is the case for many IoT devices.

In this sense, the technical device is arranged in the direction of the current behind the connector. By using NB-IoT radio signals and/or mobile radio signals, an already existing infrastructure can thus advantageously not be used in order to remedy misbehavior of the technical device.

It is essential for the invention that no wireless network operated by the owner of the technical device himself, such as a domestic WLAN, is used. A selfoperated wireless network is prone to errors and sometimes it is precisely this domestic WLAN or the router providing this WLAN that no longer functions properly. The method is based on a radio network provided by a supra-regional provider (e.g. Telekom), which is capable of transmitting the low data rate required to perform the switching operations securely, reliably and virtually everywhere.

The use of the IoT radio network NarrowBand IoT (NB-IoT) is advantageous here, since a large penetration with the radio signal is also given in unfavorable locations (e.g. in buildings or in "radio holes" in mobile radio).

Alternative IoT wireless standards such as LoRaWAN or Sigfox can also be used in principle. However, since these are independent of the mobile radio network, the method according to the invention would have to be implemented by means of a type of "bridge" which establishes at least one logical connection between the IoT radio network and the public fixed and/or mobile radio network in order to achieve identical functionality and usability.

The use of the "normal" mobile radio network - such as 2G, 3G, 4G, 5G, 6G, ... - to control the product connector is also advantageous, since the corresponding infrastructure is available practically nationwide without gaps and is compatible with any telephone-capable terminal devices of a user. However, due to the better penetration of buildings and the greatest possible exclusion of "radio holes", the use of loT radio networks generally results in a significantly higher functional reliability of the method according to the invention.

The connector has the advantage of enabling people to de-energize technical devices in a functionally safe manner and in particular from a distance (remotely) and in particular also very easily with their user terminal.

In contrast to approaches such as the Datacake loT platform or products such as Ursalink, with which a complete smart home can also be made controllable via NB-IoT, the method according to the invention works in a fundamentally different way. There are significant differences, which in particular enable easy operability and do not require any special devices for operation. A very high level of functional reliability and IT security is also the aim of the method according to the invention. In particular, the invention is suitable with seniors who are not so familiar with modern technology.

Ensuring the functionality of an IP-based telecommunications connection, for example, without the user being aware of this on site. Since a telecommunications provider can also remotely restart a router, for example. In this sense, the term user is therefore to be interpreted broadly and can comprise both natural persons and companies. For an IP-based telecommunications connection, this provides an additional data channel in addition to the IP line, so to speak.

By connecting the connector upstream or installing it in the telecommunications provider's router, very frequent faults can be corrected remotely around the clock. An expensive on-site technician intervention can thus often be prevented.

As a further advantage, digitalization is supported, since people, especially older people, without the appropriate knowledge or skills are able to use their technical devices thanks to "Smart Socket" functionally and very easily, or to "repair" them again.

Smart-home products (e.g. Quivicon) work much more reliably and this also during longer absence from home, especially when the user is on vacation.

For the technical implementation of the connector, new web portal and also no app is needed, which would have to be newly developed if necessary and also constantly kept up to date. The implementation can essentially be realized by providing the connector as hardware, which can simply be connected on site or is already built into the device.

Unnecessary new purchases and thus electronic waste are prevented, as devices can be effectively "repaired".

In one embodiment, the unique call number comprises the control command. For example, it is possible that the selection of the technical device by the call number alone triggers the control command. In another embodiment, it is possible that the call number shows by different data fields. For example, a first field may specify the destination address in terms of a call number of the technical device, with a further data field specifying a particular control command. One way of structuring a call number with different control commands is as follows: Call number-1; Call number-2. Thus, for one and the same call number, the 1 can be dialed once additionally, for example on the keypad of a telephone, with the 1 triggering a first control command alternatively, the user can also dial the 2, with the 2 triggering another control command.

Advantageously, this provides a means of transmitting the control command to the technical device without further equipment and merely via a telephone-capable terminal, for example also a conventional landline telephone.

The unique call number of the connectors can also be referred to as an ID.

The connector, in particular designed as an loT connector, has a unique call number which can also serve as a call number for commissioning and later execution of the control commands.

The call number can be formed from a combination of digits that includes the service (e.g. loT) and/or the function (e.g. NEUSTART), e.g. by means of a vanity number. For IOT, this would then be the digit combination 04680, which is not assigned as a prefix in Germany. For the function T(elekom)START this would be 0878278 and for the function T(elekom)ROUTER this would be 08768837, also these prefixes are currently not assigned. Of course, established service numbers can also be used for this purpose, such as 0800xxx.

In addition to the combination of digits (identifying the process, service or function), a sequence of digits uniquely identifying the loT device or the SIM card installed in it may be provided, e.g. in the form of serial number and/or IMSI.

The ID of the loT device may be formed from the combination of digits (for the method, service and/or function) and a sequence of digits for the respective loT device and/or the SIM card installed therein.

In one embodiment, the menu navigation is designed as a keyboard input, in particular via the dial keys of the user terminal, and/or as a voice input. The processor can be designed to provide the user with the menu guidance by means of a voice output and/or pictorial output.

This advantageously enables virtually any telephone-capable user terminal to be suitable for transmitting the corresponding control commands to the connector. In particular, the menu navigation can be provided as a voice dialog for the user, which is implemented on the processor of the connector. For this purpose, in particular a speech generation module may be implemented on the processor of the connector. One possibility is also that the call is redirected to a server of the telecommunication provider for the purpose of menu guidance by a voice dialog, which server provides the voice dialog. A pictorial output can be implemented in particular if the user terminal of the user is a smartphone. In this case, the connector is set up to prepare the menu navigation programmatically so that it can be displayed on the smartphone as pictorial menu navigation.

In one embodiment, the connector is set up to store the user's telephone number transmitted to it during a first dial-up as authorized, in particular in a memory unit of the connector, and to execute control commands during subsequent calls only if these can be assigned to the authorized number.

Advantageously, this provides an efficient security mechanism that prevents unauthorized persons from executing control commands on the connector. If a person also happens to have dialed the telephone number first, the user can already recognize when the connector is put into operation that it has been hacked and return it or reset it accordingly, in particular manually on the device, so that the telephone number is deleted from the connector and the procedure described above virtually starts again. The great advantage is that the connector cannot be hacked during operation as soon as the user has made his telephone number known to the connector.

This therefore means, mutatis mutandis, that the terminal device authorized to control the connector is identified in particular on the basis of its call number transmitted during the call, this transmitted call number being the one used for the initial start-up of the connector. This is, for example, the mobile phone number of the mobile phone from which the ID of the connector was "called". However, it is also possible to additionally use the IMEI and/or IMSI number of the terminal or SIM card used in order to also "connect" it to the connector, i.e. to assign it to the connector. This process may be referred to in particular as "pairing". In the following, the "pairing call number" is the call number that was used for the initial start-up of the connector.

In one embodiment, pairing can be technically implemented as follows: In order to ensure that the ID and/or call number is not accidentally or intentionally "paired" with a phone number by the "wrong" smart socket (e.g., as a result of a typing error when entering the ID/phone number), it is advantageous to include an initialization number with each loT device, analogous to the ID/phone number.

When calling an ID and/or phone number that is not currently "paired", this number is requested so that pairing can be established at all. This is the only way that the method according to the invention "knows" that the user is actually in possession of the loT device.

For clarification: The transmitted call number is therefore not the unique call number of the connector, but the call number associated with the user terminal, i.e. its call number.

Management of the pairing number assigned to the connector, which is authorized to control it (or several of them), can also be done via the customer center or a customer app of the Internet or mobile phone provider. The same applies to the assignment or reassignment of the PIN.

The fact that only operators authorized to do so can control the connector can be ensured in the loT radio network NB-loT in particular on the basis of the SIM card used, which can be uniquely identified and authenticated as authorized in the 4G network of the mobile network provider. Supplementary or substitute mechanisms, for identifying the connector, in particular designed as an IOT device, for authenticating the loT radio network and/or for authenticating control information can also be provided via the specific loT standards used.

In one embodiment, the connector is arranged to execute the control commands if the user transmits a correct PIN stored in the connector. For this purpose, in particular the processor is set up to compare a PIN entered by the user via his terminal device with the PIN stored in the connector. The PIN may, for example, be transmitted to the connector by keyboard input and/or voice input. In the case of voice input, the processor knows a corresponding voice-to-text module. In particular, the PIN may be a component of the telephone number.

Generally or optionally, the user can assign an individual PIN for the execution of the procedure, which must be used in addition to the ID in the future to be able to control the loT device. This PIN should be at least. 4 digits. The "new" ID then consists of the "old" ID (see "1. Identification of the loT device) and the assigned PIN, which can be combined as desired.

This has the advantage of adding another layer of security that protects the connector from unauthorized access.

Note: If the ID in conjunction with the assigned PIN is then stored as a new contact on the terminal device (e.g., mobile phone), any person authorized to use this terminal device can control the loT device in the future by calling (or, depending on the implementation, possibly also by text message) this contact and do so worldwide.

In one embodiment, the control command is configured as a restart command, an on command, and/or an off command.

Advantageously, the restart command in particular is suitable for restoring the functionality of the technical device. An off command can be particularly useful if a user remembers that he is abroad for a longer period of time, for example, but has forgotten to switch off an intensively power-consuming technical device. In this case, the "Off" control command provides a way to reduce power consumption remotely. The On command then allows the user to reactivate this device at a time of his choice. For example, it may make sense for some devices to be supplied with power only at certain times of the day

In principle, however, it is also possible to define further control commands such as
- "Duration Off": determines how long the device remains switched off;
- "Duration On": determines how long the device remains switched on;
- "Time duration restart": determines how long the restart takes;
- "Repeat Restart": determines how often a restart is executed;
- "Pause time": determines how long no change of the current state takes place;

In one embodiment, the connector comprises at least one switch, wherein by means of the at least one switch it can be determined which control commands can be executed and/or whether a reset of the connector is performed.

This allows a user to easily determine which control commands are to be executed by the connector. One possible embodiment is, for example, haptic buttons, each of which represents a control command and determines which control command is executed depending on whether they are pressed in or in a disengaged state. For example, each of these buttons may also still be stored with a control command number so that the user knows how to trigger the corresponding control command. The hardware reset of the connector makes it possible to restore it to its initial state, so that in particular the "pairing" and/or pin assignment can be performed again.

Via a setting made on the connector/IoT device by the user, function types (e.g., RESTART, OFF and/or ON) and also times (e.g., the duration for a restart) could be changed and/or set. The same applies to the cancellation of the existing pairing with the pairing call number. I.e. by pressing a reset button on the connector for a longer time (e.g. 5 seconds), the connector is reset to the delivery state. The caller's phone number transferred to the ID (phone number) specified on the device during the next call is then automatically "paired" as the new pairing phone number. A PIN would then have to be assigned again.

In one embodiment, a first execution of a control command disables a subsequent second execution of the control command for a defined period of time.

This offers the advantage that if an attacker succeeds in overcoming the security levels, for example by imitating the transmitted call number of the terminal device, the attacker cannot execute the control commands as often as desired. Typically, a router does not need to be rebooted more than once a week. Thus, it would be a possibility to specify that the reboot control command, as well as any other control command, can only be executed once per week. Otherwise, there would be the possibility that an attacker could, for example, render an alarm system unusable by continuously triggering a reboot command.

In one embodiment, the first interface is configured as a standard plug and/or the second interface is configured as a standard socket.

This offers the advantage that the connector can be used in a practical way as a kind of between plug with a variety of technical devices. In particular, the standard can be adapted to the respective standard of different countries.

In one embodiment, the connector includes a plurality of interfaces configured like the second interface.

This offers the advantage that a restart can be carried for a plurality of technical devices, one of the technical devices being connected to one of the second interfaces in each case. Even if only one of the technical devices connected to the second interface requires a reboot, the reboot is generally not detrimental to the remaining technical devices. Furthermore, it may be provided that the processor of the connector can control for which second interface the connector disables a power supply. The user can control this, for example, in the menu navigation or by dialing an appropriate telephone number.

When the connector is delivered (i.e. in the factory setting), the switching state of the connector can be set to "ON". This ensures that the device connected to it initially continues to function as usual, unaffected by the connector.

According to a second aspect of the invention, there is provided a telephone-enabled user terminal adapted to transmit a radio signal comprising at least one control command, the radio signal being adapted to trigger the control commands at the connector described above. The telephone-enabled user terminal may be, for example, a landline telephone, a smartphone and/or a smartwatch.

According to a third aspect of the invention, a technical arrangement for restoring a functionality of a technical device operated with electricity is given. In the system of the arrangement, it is of particular importance where the individual components are arranged with respect to the direction of a current that supplies the technical device. The arrangement comprises:
a technical device powered by electricity, the device being adapted in particular to be reset to an initial state by a restart;
a previously described connector, wherein the connector is connected with its first interface to a power supply and with its second interface to the technical device;
a user terminal, in particular a telephone-capable terminal,
a radio network, in particular a mobile radio network, the radio network providing a communication channel between the terminal and the connector,
   wherein at least one radio signal in the form of an NB-IoT radio signal and/or a mobile radio signal can be transmitted from the terminal to the connector by means of the radio network, and
   in that the radio signal comprises at least one control command which can be executed by a processor of the connector and/or in that the processor is set up to start a menu navigation for transmitting the control command in response to the reception of the radio signal.

The connector thus functions as a power disconnection device for the technical device downstream of it in the direction of the power supply and thus makes it possible to trigger a restart remotely by means of already existing radio networks of a telecommunications provider, which restores functionality of the technical device.

According to a fourth aspect of the invention, a method for restoring a functionality of a technical device operated with electricity is given, the method being executable in particular by means of a previously described arrangement, comprising the following steps:
Providing a connector as described above, the connector being provided on the technical device so as to enable or disable a power supply to the device;
Sending a radio signal by means of a user terminal to the connector, in particular the radio signal is sent when a malfunction of the device has been detected;
Execution of a control command caused by the radio signal to restore the functionality of the device,
   wherein the radio signal is transmitted from the terminal to the connector by means of a NB-loT radio signal and/or a mobile radio signal.

The advantages of the method according to the invention are substantially analogous to the advantages of the connector according to the invention described previously.

In one embodiment, a status of a radio connection of the connector to a radio station of a telecommunications provider is checked regularly. After a defined period of inaccessibility (e.g. 15 minutes) has elapsed, the malfunction is indicated by SMS and/or a call to the pairing telephone number.

This has the advantage that the user always knows whether he can transmit control commands to the connector.

Further possible features of the invention relate to transmission security: cryptographic measures can be used to protect the transmitted data between the connector and the mobile communications provider from becoming known and being altered. Here, symmetric and/or asymmetric encryption can be used and, if necessary, hash values can be used to sign a data record or parts thereof. It is advisable to use standardized technologies, such as LPWA technology. In this technology, two types of implementation in particular have proven successful, namely "NarrowBand IoT" (NB-IoT) and "Long Range Area Network" (LoRaWAN). When using NB-IoT, the security standards defined in the 3GPP standard for 4G/LTE can be applied.

Other possible features of the invention relate to IT security: In contrast to loT systems whose backend can be accessed and controlled via the Internet using a web portal or app, the IT security of the method is significantly increased because there is no backend that can be attacked via the Internet. The backend is neither on the Internet nor can it be accessed via the Internet; the backend is located in particular at the provider of the process and can only be accessed and configured by the provider.

Attackers would have to know the ID (i.e., the phone number and the possibly assigned PIN) for the connector and also transmit the pairing phone number (e.g., by means of CLIP - Calling Line Identification Presentation) as the phone number for a call in such a way that this can be interpreted as "genuine" and no call ID spoofing can be suspected. In the event of a defined number of incorrect calls on the call number, the occurrence can be pointed out by SMS and/or call. The immediate blocking of the connector is also possible, e.g. after 5 incorrect calls, i.e. "incorrect entries" of the PIN. The user can be informed about the incident by a call center via phone call or SMS dispatch. Even automatable bots could be used for this purpose.

In the following, preferred implementation examples of the present invention are explained with reference to the accompanying figure:
- Fig. 1:: shows a connector according to the invention.
- Fig. 2:: shows a first embodiment example of the system according to the invention.
- Fig. 3:: shows a second embodiment example of the system according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

The method can be implemented e.g. in the form of an intermediate plug, which is inserted between an already installed socket and a mains plug of a technical device. Another possibility is that the intermediate plug is installed as a disconnecting device for cutting off the current already in newly produced technical equipment. The connector can be an IoT-device.

The method can be based on switching signals that are transmitted in particular via NarrowBand IoT (NB-IoT) and thus via the 4G mobile network (LTE).

Five possible embodiments of the connector are shown in detail below.
Option 1: "Smart-Socket": here the connector is implemented as an intermediate plug. On one side of the "Smart-Socket" device the power supply plug of the technical device is plugged in and on the other side the "Smart-Socket" device is plugged into an existing socket. This socket may be built-in, for example, as part of the house installation, but may also be the end of any extension cable or multiple plug. "Smart-Socket" allows the power supply to be switched single-pole or all-pole (usually two-pole, on the L and N conductor).
Option 2: "Smart socket" as a component of a technical device, e.g. a media receiver or router. The "Smart Socket" makes it possible to switch the power supply of the media receiver or router to single-pole or all-pole (at least L and N conductors).
Option 3: "Smart socket", as an adapter. The adapter is plugged in (with or without cable connection) on one side directly to the technical device to be "switched". On the other side, the cable carrying the power for the device is then plugged in. This is very similar to option 1, but the standard plugs (e.g. Schuko) are not used on both sides. "Smart Socket" makes it possible to switch the power supply of the technical device single-pole or all-pole (min. L and N conductor).
Option 4: "Smart-Socket", for mounting in control cabinets. Smart-Socket is plugged onto the top-hat rail and looped into the circuit to be switched. As a rule, only the L phase is switched; all-pole disconnection is also conceivable (min. L and N conductors).
Option 5: "Smart Socket", standalone. Smart Socket is installed flush-mounted (e.g. in a deep flush-mounted device box and below the socket) or surfacemounted (e.g. in a junction box) and looped into the circuit to be switched. As a rule, only the L phase is switched; all-pole disconnection is also conceivable (at least L and N conductors).

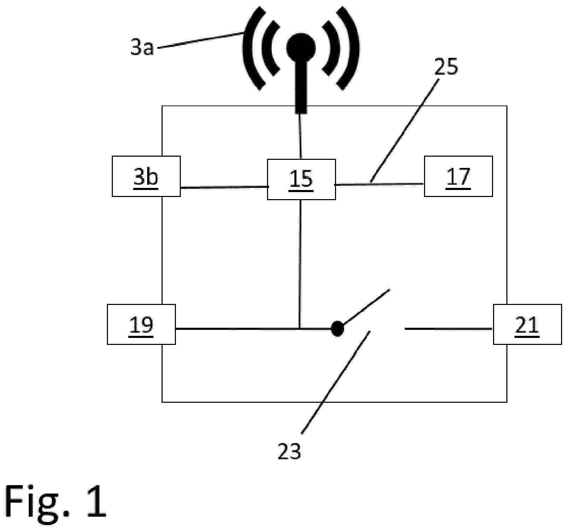

Fig. 1 shows a connector 3 according to the invention. The connector 3 has: an antenna 3a as a radio module, a control panel 3b, a processor unit 15, a memory unit 17, a first interface 19 set up for connection to a live line, a second interface 21 set up for connection to a technical device 2 and a switch module 23. Furthermore, the connector 3 comprises a Sim module which can be integrated in the radio module or also as an eSIM in the processor unit 15.

The respective components are in a data-conducting connection 25 with each other. Through this, the messages received from the antenna 3a and the inputs made by the user can be passed on via the control panel 3b to the processor unit 15, which can process and take this information into account. The memory unit 17 may, for example, store the paired call numbers.

Depending on the switching command, which is transmitted to the antenna 3a via mobile radio signal or/and or NB-loT radio signal and interpreted by the processor unit 15, the processor unit 15 controls the switch module 23. The switch module 23 serves to temporarily block a current-carrying line 27 between the first interface 19 and the second interface 21. For example, in the event of a restart command, the processor unit 15 may set the switch of the switch module 23 to block current forwarding for, for example, 1 minute. After 1 minute, the switch is then flipped and the power forwarding is enabled again. Since the technical device 2 is coupled to the connector 3 with respect to its power supply, this temporary current interdiction is virtually equivalent to a restart command for the technical device 2.

The switch can be either a logic switch or a hardware switch. Both are set up and suitable for blocking and releasing a power supply.

In particular, the connector 3 may draw power for its operation from the first interface 19.

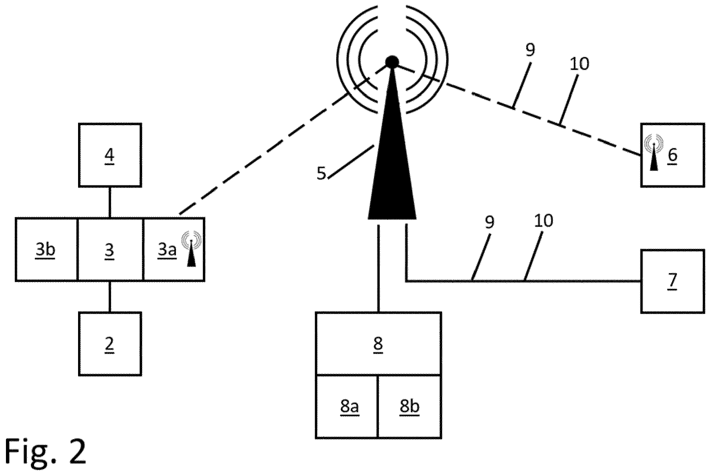

A first embodiment of the arrangement of the invention is described below with reference to Fig. 2:
In the first embodiment of the system, the connector is implemented as an intermediate plug.

In Fig. 2, a technical device 2, for example a router 2, is in a direct connection with the connector 3 that the connector 3 can block or unblock the power supply of the technical device 2.

The connector 3 draws power to ensure its operability from a socket 4, which is in particular part of an existing power supply (e.g. the house network). The socket 4 also supplies the power for the technical device 2. However, depending on the specific application scenario, the connector 3 can also be connected to an additional power supply and this also at changing or mobile locations.

The connector 3 comprises an antenna 3a. There is a radio link between the antenna 3a and the radio mast 5, this is preferably in the form of an loT radio network such as NB-IoT. Alternative radio links to an loT radio network are also possible, such as mobile radio (2G, 3G, 4G, 5G, 6G etc.). The advantage in using an loT radio network is especially the better "penetration" of walls and ceilings and thus a higher functional reliability. Depending on the specific place of use of the connector 3, the selection of the most suitable radio network may vary.

Furthermore, the connector 3 has a control panel 3b. The control panel 3b is not absolutely necessary, but enables in particular an extended range of functions that can be set directly on site, for example for the possible switching states such as START, ON and OFF, and also the respective time duration of these states. Advantageous is in particular a RESET function, which can be triggered via the control panel 3b and can reset the connector 3 to the delivery state (factory setting).

The components of the connector 3 can be installed in one housing or distributed over several housings. In the "intermediate plug" design in the first embodiment, the housing of the connector 3 is generally plugged directly into the socket 4.

On the connector 3, in direct structural and/or logical context thereto, there is the indication of a unique ID assigned thereto. That is, the ID can be located, for example, on the connector 3, the antenna 3a, the control panel 3b, the packaging, the operating instructions, a separate slip of paper and/or a sticker. The ID is at the same time also the telephone number which must be contacted, for example by phone call, for commissioning and also for subsequent use of the device. Alternatively or in addition, contact can also be made by other means, e.g. by SMS.

The phone number of the terminal device 7 with which the connector 3 is called for the first time may be "paired" in a backend 8 and/or directly on the connector 3 with the ID/phone number 10 of the connector 3, thereby becoming the pairing phone number 9. The terminal device 7 may be a landline phone 7, a smart phone 7, and/or any other phone-enabled device 7.

To increase security, it is advantageous if the user of the procedure can also assign a PIN to further increase security against unauthorized operation. This PIN should be at least 4 digits long and can be prefixed or suffixed to the ID/call number 10 of the delivery state. This means, for example, that a given 10-digit ID/call number 10 in the delivery state of the connector 3 is extended by means of the 4-digit pin to a new and now 14-digit ID/call number 10. This 14-digit ID/call number 10 must then always be contacted by the terminal device in future in order to be able to control the connector 3 (for example by call or SMS).

It may prove advantageous if a corresponding contact or speed dial for the ID/call number 10 is created on the terminal 7 used, which can be used for subsequent use of the connector 3.

Via a RESET function triggered by the control panel 3b, both the pairing call number 9 in the backend 8 and the PIN can be deleted. The connector 3 is thus reset to the delivery state (factory setting).

The backend 8 is at least in a logical connection to a radio mast 5, which is in a direct radio connection to the antenna 3a and thus the connector 3. The backend 8 comprises a database 8a in which the assignment of the pairing call number 9 to the ID/call number 10 is stored. In addition, the backend 8, the database 8a and/or the controller 8b has knowledge of the valid ID/call numbers 10 of the connectors 3 associated with the telecommunications provider.

Advantageously, the current switching state of the connector 3 is also stored in the database 8a so that it can be queried by the user or suitably displayed to the user if required.

The database 8b may also contain the current value of a counter that totals the number of "incorrect" access attempts to control the connector 3. The "incorrect" access attempts are detected as part of the backend 8 and/or by the controller 8b, and increment the counter in the database 8a for each "incorrect" access attempt made. This continues until a limit is reached or a correct access attempt is made. In the latter case, the counter is reset again.

A "false" access attempt can be detected in at least two ways:
1.the terminal 7 dials an ID/call number 10 where only the ID/call number initially defined for the smart socket 3 (i.e. in the delivery state) is correct, but the PIN supplemented by the user has been entered incorrectly.
2. the pairing call number 9 is not correct.

If the value of the counter in the database 8a exceeds the limit of "allowed" "incorrect" access attempts set for this purpose, a controller 8b can either prevent the controllability of the connector 3 altogether (function blocking) and/or contact and inform the user of the method. The contact is preferably made directly to the pairing number 9 stored in the database 8a, for example by phone call or SMS.

An "allowed" access attempt comprises an entry of the exact ID/phone number 10. In addition, the terminal device used must also be able to be recognized as "allowed". A terminal device is "allowed" if the call number recognized for the terminal device is identical to the pairing call number 9, which is also stored in the database 8a.

The method recognizes the caller's number in particular on the basis of the standard functionalities of the fixed and/or mobile network available for this purpose. An improvement in the detection of an "allowed" access attempt can be achieved in particular if, alternatively or additionally, the terminal device used, e.g. the mobile telephone 6 and its SIM are also checked. This can be implemented on the basis of the number of the IMEI of the terminal device 7 and/or the number of the SIM card. In this case, the pairing call number 9 in the database 8b would have to be supplemented by this information.

To increase the security of caller ID recognition, it is advantageous if the provider of the smart socket 1 is also a telecommunications provider. When a call is made, it could be checked for mobile radio 6 in the HLR (home location register) whether there really is a call to the ID/phone number 10 at the moment and this could be transferred to the backend 8 and the controller 8b, unless the backend 8 or the controller 8b has carried this out itself. The same applies to a landline telephone 7 in use.

However, the telecommunication provider could also in principle only allow calls or SMS to pass through to the backend 8 where the validity of the call number has been previously checked. Any other known way of detecting call ID spoofing can also be used alternatively or additionally to increase the security of caller ID detection.

The database 8a may comprise one or more databases which are at least logically related to each other and accessible from the controller 8b.

The radio mast 5 may also be in direct connection with the mobile telephone 6.

Fig. 2 shows at least one logical connection of the terminal devices 7 to the radio mast 5. Intermediate technical equipment of the fixed network and/or mobile radio network is not shown, but is known to the person skilled in the art.

A switching function of the connector 3 is triggered only when an "allowed" access attempt to the back-end 8 has been detected. The control unit 8b can trigger switching operations immediately and/or in a controlled manner via a dialogue with the user or by means of control information transmitted by the terminal device 7.

If the configuration of the method provides for only one function, for example an intermediate socket 3 with only the function RESTART, then it is already sufficient if only one "allowed" access attempt is detected by the backend 8 and/or the control unit 8b in order to trigger the function controlled by the control unit 8b in the connector 3.

However, the method can also provide for several control commands, for example, in the case of the intermediate socket 3, the functions RESTART, ON and OFF. In this case, it is advantageous if these are also transmitted as control information in an SMS and/or can then be specifically selected by voice command or by pressing a button on the terminal device used in the case of an existing telephone connection. Alternatively, it is also possible to create a separate contact in the terminal for each function, which can be called by the user or contacted by SMS.

A guided call is also conceivable in which the user is asked, for example, for the function to be executed. An announcement text for this could be: "Which switching command do you want to execute? Say 1 or RESTART, or press 1 on the keypad of your terminal if a RESTART is to be executed. Say 2 or ON, or press 2 on the keypad of your terminal if you want to switch the device on. Say 3 or OFF, or press 3 on their terminal's keypad if the unit is to be turned off. " The respective function can then be selected by voice or button. The above is also possible by receiving an SMS with the corresponding information. By sending the message "1" or "NEUSTART", this function/switching command could then be selected specifically.

The controller 8b determines the control information to be implemented in each case and sends this to the connector 3 via the radio mast 5 and the antenna 3a. It is advantageous if the connector 3 confirms the execution of the control command. This is done in the opposite way by the connector 3 sending the feedback that the control command has been successfully executed (or, if necessary, an error message in this respect). By means of the antenna 3a via the radio mast 5 the feedback reaches the backend 8. The control unit 8b evaluates the feedback and writes it together with the sent control commands into the database 8a and assigns this information to the connector 3 with the corresponding ID/call number 10.

For more complicated control commands, which may also be combined and which may also specify a switch-on time and/or duration, the use of a bot for dialogue with the user is advantageous. Such a control command could be: next Tuesday the connector 3 should be switched off from 09:00 to 10:00 (function OFF).

The bot can specifically request the desired switching commands and sequences from the user. The controller 8b controls the bot and thus determines the desired control information and sequences. It can implement these immediately, first store them in the database 8a, or a mixed form of both is also possible. It is advantageous if all successfully executed control information is stored in the database 8a, as well as information for which an error occurred.

The control unit 8b can automatically send out control commands again after a certain time or a certain number of times. If the control unit still does not receive any feedback on a successful execution of the control information, it can automatically contact the user. This is done in particular on the basis of the stored pairing call number 10 for the terminal device, for example by call or SMS. Again, bots controlled by the control unit 8b may be used to inquire about and resolve the cause.

In addition to the use of bots, call centres commissioned for this purpose can also be used in the procedure. The persons employed there can support the users in setting up, assigning PINs and, if necessary, resetting and/or troubleshooting the Smart Socket 3. This "human" component should not be neglected, especially for older users.

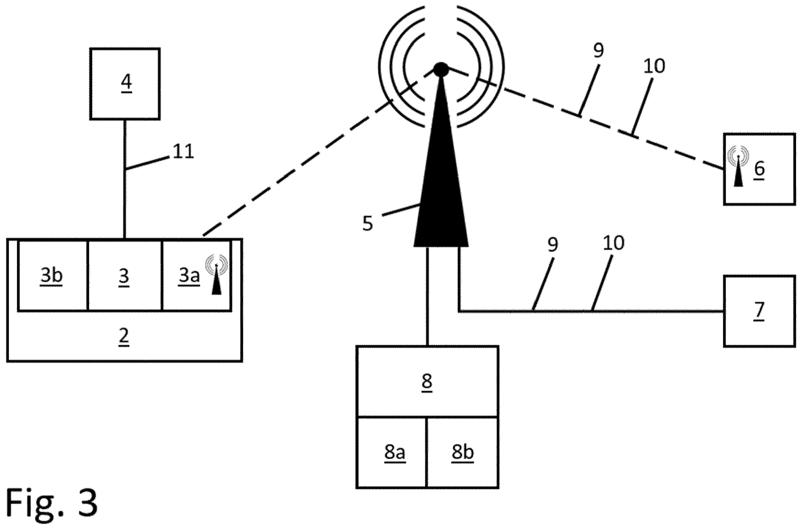

A second embodiment of the arrangement of the invention is described below with reference to Fig. 3:
In the second embodiment of the system, the connector 3 is integrated in a technical device 2, for example in a router 2.

In the method according to Fig. 3, the technical device 2 is in a direct connection with the connector 3, in such a way that the connector 3 can directly control the power supply of the technical device 2, since the connector 3 is suitably incorporated in the technical device.

The connector 3 is as a component of the technical device 2. This integration into the technical device 2 may also be provided for the component 3a, antenna and the optional component 3b control panel. However, at least one logical connection must exist between these components and the connector 3.

The smart socket 3 device obtains the power to ensure its operation, in particular via the power cable 11 with which the technical device 2 is connected to the socket 4. With respect to the power supply of the technical device 2 (e.g. router), smart socket 3 can switch its complete power supply, at least single-pole or all-pole (at least L and N conductors). The current to be switched comes from the socket 4 and is also supplied via the mains cable 11.

The connector 3 comprises an antenna 3a. There is a radio link between the antenna 3a and the radio mast 5, this is preferably in the form of an loT radio network such as NB-IoT. Alternative radio links to an loT radio network are also possible, such as mobile radio (2G, 3G, 4G, 5G, 6G etc.). The advantage in using an loT radio network is especially the better "penetration" of walls and ceilings and thus a higher functional reliability. Depending on the specific place of use of the connector 3, the selection of the most suitable radio network may vary.

Furthermore, the connector 3 has a control panel 3b. The control panel 3b is not absolutely necessary, but enables in particular an extended range of functions that can be set directly on site, for example for the possible switching states such as START, ON and OFF, and also the respective time duration of these states. Advantageous is in particular a RESET function, which can be triggered via the control panel 3b and can reset the connector 3 to the delivery state (factory setting).

On the connector 3, in direct structural and/or logical context thereto, there is the indication of a unique ID assigned thereto. That is, the ID can be located, for example, on the connector 3, the antenna 3a, the control panel 3b, the packaging, the operating instructions, a separate slip of paper and/or a sticker. The ID is at the same time also the telephone number which must be contacted, for example by phone call, for commissioning and also for subsequent use of the device. Alternatively or in addition, contact can also be made by other means, e.g. by SMS.

The phone number of the terminal device 7 with which the connector 3 is called for the first time may be "paired" in a backend 8 and/or directly on the connector 3 with the ID/phone number 10 of the connector 3, thereby becoming the pairing phone number 9. The terminal device 7 may be a landline phone 7, a smart phone 7, and/or any other phone-enabled device 7.

To increase security, it is advantageous if the user of the procedure can also assign a PIN to further increase security against unauthorized operation. This PIN should be at least 4 digits long and can be prefixed or suffixed to the ID/call number 10 of the delivery state. This means, for example, that a given 10-digit ID/call number 10 in the delivery state of the connector 3 is extended by means of the 4-digit pin to a new and now 14-digit ID/call number 10. This 14-digit ID/call number 10 must then always be contacted by the terminal device in future in order to be able to control the connector 3 (for example by call or SMS).

It may prove advantageous if a corresponding contact or speed dial for the ID/call number 10 is created on the terminal 7 used, which can be used for subsequent use of the connector 3.

Via a RESET function triggered by the control panel 3b, both the pairing call number 9 in the backend 8 and the PIN can be deleted. The connector 3 is thus reset to the delivery state (factory setting).

The backend 8 is at least in a logical connection to a radio mast 5, which is in a direct radio connection to the antenna 3a and thus the connector 3. The backend 8 comprises a database 8a in which the assignment of the pairing call number 9 to the ID/call number 10 is stored. In addition, the backend 8, the database 8a and/or the controller 8b has knowledge of the valid ID/call numbers 10 of the connectors 3 associated with the telecommunications provider.

Advantageously, the current switching state of the connector 3 is also stored in the database 8a so that it can be queried by the user or suitably displayed to the user if required.

The database 8b may also contain the current value of a counter that totals the number of "incorrect" access attempts to control the connector 3. The "incorrect" access attempts are detected as part of the backend 8 and/or by the controller 8b, and increment the counter in the database 8a for each "incorrect" access attempt made. This continues until a limit is reached or a correct access attempt is made. In the latter case, the counter is reset again.

A "false" access attempt can be detected in at least two ways:
1.the terminal 7 dials an ID/call number 10 where only the ID/call number initially defined for the smart socket 3 (i.e. in the delivery state) is correct, but the PIN supplemented by the user has been entered incorrectly.
2. the pairing call number 9 is not correct.

If the value of the counter in the database 8a exceeds the limit of "allowed" "incorrect" access attempts set for this purpose, a controller 8b can either prevent the controllability of the connector 3 altogether (function blocking) and/or contact and inform the user of the method. The contact is preferably made directly to the pairing number 9 stored in the database 8a, for example by phone call or SMS.

An "allowed" access attempt comprises an entry of the exact ID/phone number 10. In addition, the terminal device used must also be able to be recognized as "allowed". A terminal device is "allowed" if the call number recognized for the terminal device is identical to the pairing call number 9, which is also stored in the database 8a.

The method recognizes the caller's number in particular on the basis of the standard functionalities of the fixed and/or mobile network available for this purpose. An improvement in the detection of an "allowed" access attempt can be achieved in particular if, alternatively or additionally, the terminal device used, e.g. the mobile telephone 6 and its SIM are also checked. This can be implemented on the basis of the number of the IMEI of the terminal device 7 and/or the number of the SIM card. In this case, the pairing call number 9 in the database 8b would have to be supplemented by this information.

To increase the security of caller ID recognition, it is advantageous if the provider of the smart socket 1 is also a telecommunications provider. When a call is made, it could be checked for mobile radio 6 in the HLR (home location register) whether there really is a call to the ID/phone number 10 at the moment and this could be transferred to the backend 8 and the controller 8b, unless the backend 8 or the controller 8b has carried this out itself. The same applies to a landline telephone 7 in use.

However, the telecommunication provider could also in principle only allow calls or SMS to pass through to the backend 8 where the validity of the call number has been previously checked. Any other known way of detecting call ID spoofing can also be used alternatively or additionally to increase the security of caller ID detection.

The database 8a may comprise one or more databases which are at least logically related to each other and accessible from the controller 8b.

The radio mast 5 can also be in a direct connection to the mobile telephone 6.

Fig. 3 shows at least one logical connection of the terminal devices 7 to the radio mast 5. Intermediate technical equipment of the fixed network and/or mobile radio network is not shown, but is known to the person skilled in the art.

A switching function of the connector 3 is triggered only when an "allowed" access attempt to the back-end 8 has been detected. The control unit 8b can trigger switching operations immediately and/or in a controlled manner via a dialogue with the user or by means of control information transmitted by the terminal device 7.

If the configuration of the method provides for only one function, for example an intermediate socket 3 with only the function RESTART, then it is already sufficient if only one "allowed" access attempt is detected by the backend 8 and/or the control unit 8b in order to trigger the function controlled by the control unit 8b in the connector 3.

The control command RESTART comprises the switching states OFF and ON in chronological order. This results in particular from the technical structure of the router. The switching state OFF must be present at least until the technical device 2 is completely de-energized (incl. discharging of any memory modules present, such as capacitors and buffer batteries). For all embodiments of the invention, it is advantageous to select a time duration for the OFF switching state of approximately one minute. However, depending on the devices, other time durations are also possible in order to completely de-energize the technical device 2. The connector can be set up by means of operating elements so that the user can set a length of the OFF state himself, for example between one and five minutes. In particular in steps of one minute.

The controller 8b determines the control information NEW START to be implemented and transmits it to the smart socket 3 via the radio mast 5 and the antenna 3a. It is irrelevant here whether the transmitted control information contains the temporal context for the expiry of the switching states (e.g. switching state OFF for one minute) or whether, on the basis of the configuration of the smart socket 3, only one temporal context (e.g. switching state OFF for one minute) is always possible.

Advantageously, the smart socket 3 confirms the execution of the control information. This is done in the opposite way, i.e. the smart socket 3 sends the feedback that the control information has been successfully executed (or possibly also an error message) via the antenna 3a to the radio mast 5 and via this the feedback then reaches the back end 8 again.

The control unit 8b evaluates the feedback and writes it together with the transmitted control information into the database 8a, where it is then assigned to the smart socket 3 with the corresponding ID/call number 10.

The control unit 8b can automatically send out control commands again after a certain time or a certain number of times. If the control unit still does not receive any feedback on a successful execution of the control information, it can automatically contact the user. This is done in particular on the basis of the stored pairing call number 10 for the terminal device, for example by call or SMS. Again, bots controlled by the control unit 8b may be used to inquire about and resolve the cause.

In addition to the use of bots, call centres commissioned for this purpose can also be used in the procedure. The persons employed there can support the users in setting up, assigning PINs and, if necessary, resetting and/or troubleshooting the Smart Socket 3. This "human" component should not be neglected, especially for older users.

The following features regarding pairing are technically applicable to all embodiments: In order to ensure that the ID and/or call number 10 is not accidentally or intentionally "paired" with a phone number by the "wrong" smart socket 3 or connector 3 (e.g., as a result of a typo when entering the ID/phone number), it is advantageous to attach an initialization number to each smart socket, analogous to the ID/phone number 10.

When calling an ID/phone number that is not currently "paired", the initialization number is requested so that pairing can be established at all. This is the only way that the Smart-Socket 3 or connector 3 according to the invention "knows" that the user is actually in possession of the Smart-Socket 3 or the connector 3.

The use of the initialization number is not mandatory to ensure the functionality of the method, and is therefore not shown separately in the figures.

One advantage of the invention is that IT security is significantly increased, since the components essential for the functionality of the invention cannot be attacked via the Internet or accessed via it. Attackers would have to know the call number and the possibly assigned PIN for the loT device and also transmit the pairing call number as the call number in such a way that this is interpreted as "genuine". In the event of a defined number of incorrect calls to the phone number (i.e., the phone number is correct, the PIN is incorrect), which could be used to guess the PIN, "attempts" are indicated by SMS and/or call and, if the PIN is "forgotten", the authorized user is enabled to reassign it.

## Claims

1. A connector for restoring a functionality of a powered technical device, the connector comprising:
• a first interface designed for connection to a current-carrying line or to a battery;
• a second interface designed for connection to a line supplying power to the technical device;
• a radio module designed to receive and/or transmit at least one radio signal,
• a SIM module, the SIM module assigning a unique call number to the connector, the call number being callable by a user, in particular via his user terminal,
• a processor, the processor being arranged to execute control commands;
**characterized in that**
the radio signal is in the form of an NB-loT radio signal and/or a mobile radio signal, and
the radio signal comprises at least one control command and/or that the processor, in response to receiving the radio signal, starts a menu navigation for transmitting the control command.

2. The connector of claim 1, wherein the unique call number comprises the control command.

3. The connector according to any one of the preceding claims, wherein the menu navigation is configured as a keyboard input and/or as a voice input.

4. The connector according to any one of the preceding claims, wherein the processor is adapted to provide the user with menu guidance by voice output and/or pictorial output.

5. The connector according to one of the preceding claims, wherein the connector is set up to store as authorized the telephone number of the user terminal transmitted to it during a first dial-up and to execute control commands during subsequent calls only if these can be assigned to the authorized number.

6. The connector according to any one of the preceding claims, wherein the connector is arranged to execute the control commands when the user transmits a correct PIN stored in the connector.

7. Connector according to any one of the preceding claims, wherein the control command is configured as a restart command, an on command and/or an off command.

8. The connector according to any one of the preceding claims, wherein the connector comprises at least one switch, wherein by means of the at least one switch it is determinable which control commands are executable and/or whether a reset of the connector is performed.

9. The connector according to any one of the preceding claims, wherein an execution of a control command blocks a next execution of the control command for a defined period of time.

10. The connector according to any one of the preceding claims, wherein the first interface is configured as a standard plug and/or the second interface is configured as a standard socket.

11. The connector according to any one of the preceding claims, wherein the connector comprises a plurality of interfaces configured as the second interface.

12. A telephone-enabled user terminal adapted to transmit a radio signal comprising at least one control command provided for a connector according to any one of claims 1-11.

13. An arrangement for restoring a functionality of a technical device operated with electricity, comprising
a technical device powered by electricity, the device being adapted in particular to be reset to an initial state by a restart;
a connector according to any one of claims 1-11, wherein the connector has its first interface connected to a power supply and its second interface connected to the technical device;
a user terminal, in particular a telephone-capable user terminal,
a radio network, in particular a mobile radio network, the radio network providing a communication channel between the terminal and the connector,
**characterized in that**
the at least one radio signal in the form of an NB-loT radio signal and/or a mobile radio signal is transmitted from the user terminal to the connector by means of the radio network, and
the radio signal comprises at least one control command which is executed by a processor of the connector and/or **in that** the processor is set up to start a menu navigation for transmitting the control command in response to the reception of the radio signal.

14. Method for restoring a functionality of a technical device operated with electricity, in particular the method is executable by means of an arrangement according to claim 13, comprising the following steps:
Providing a connector according to any one of claims 1-11, wherein the connector is provided on the powered technical device such as to enable or disable a power supply to the device;
Sending a radio signal by means of a user terminal to the connector, in particular the radio signal is sent when a malfunction of the technical device has been detected;
Execution of a control command caused by the radio signal to restore the functionality of the device,
**characterized in that**
the radio signal is transmitted from the user terminal to the connector by means of an NB-loT radio signal and/or a mobile radio signal.

15. The method of claim 14, wherein a state of a radio link of the connector to a radio station of a telecommunications provider is periodically checked.
